# EUROPÄISCHE PATENTSCHRIFT

(11) **EP 2 363 222 B1**
(45) Veröffentlichungstag und Bekanntmachung des Hinweises auf die Patenterteilung: **12.09.2012**
(21) Anmeldenummer: 10405039.8
(22) Anmeldetag: 01.03.2010
(51) Int. Cl.: B22F 3/15, B22F 3/18, B22F 3/24, B22F 5/00, B31F 1/14, D21G 3/00

(54) **Rakel und Verfahren zur Herstellung von Rakeln**
Doctor knife and method for manufacturing doctor knives
Racle et procédé de fabrication de racles

(43) Veröffentlichungstag der Anmeldung: 07.09.2011
(73) Patentinhaber: DAETWYLER SWISSTEC AG, 3368 Bleienbach (CH)
(72) Erfinder: Brudermann, Hans Jörg, 3052 Zollikofen (CH); Daetwyler, Peter, 4900 Langenthal (CH)
(74) Vertreter: Rüfenacht, Philipp Michael

(56) Entgegenhaltungen:
- EP-A1- 1 182 293
- DE-A1- 1 807 325
- US-A- 6 027 614

## Beschreibung

### Technisches Gebiet

Die Erfindung betrifft eine Rakel und ein Verfahren zur Herstellung von Rakeln aus Metall, wobei die herzustellenden Rakel in einem Bereich einer Arbeitskante eine verminderte Materialstärke aufweisen, wobei in diesem Bereich die Materialstärke im Wesentlichen konstant ist.

### Stand der Technik

Rakei dienen zum Verteilen und Abstreifen von flüssigen und pastösen Massen. Sie kommen unter anderem im Verpackungstiefdruck, Illustrations- und Dekortiefdruck, Flexodruck, UV-Flexodruck, Aniloxoffset, Tampondruck, Rotationssiebdruck, sowie bei Beschichtungsverfahren zum Einsatz. Zum Beispiel wird beim Tiefdruck die überschüssige Druckfarbe von den Stegen des Druckzylinders mit einer Rakel im Bereich einer Arbeitskante abgestreift, so dass nur noch die Näpfchen mit Farbe gefüllt sind (abrakeln). Im Siebdruck wird die Rakel hingegen verwendet, um die Druckfarbe durch die Öffnungen im Sieb auf den Bedruckstoff zu pressen. Die Rakel kann als messerartig geschliffenes Stahlband ausgebildet sein, es sind aber auch Rakel aus Kunststoff oder Verbundmaterialien bekannt.

Die Rakel können aufgrund ihres Querschnittsprofils im Wesentlichen in drei Gruppen unterteilt werden:
1. Rakel in Keilform (Keilrakel) weisen eine Querschnittsfläche in der Form eines Trapezes mit zwei rechten Winkeln auf. Die Arbeitskante kann dabei auch abgeflacht oder abgerundet sein.
2. Rakel mit runden Kanten weisen im Wesentlichen eine Querschnittsfläche in der Form eines Rechtecks auf, wobei die Arbeitskante abgerundet ist.
3. Rakel mit Lamellen (Lamellenrakel) weisen eine Querschnittsfläche in der Form eines Rechtecks mit einem, ausgehend von einer Ecke, im Wesentlichen rechteckigen Ausschnitt auf, wobei der konkave Bereich der Lamellenrakel abgerundet sein kann und eine Arbeitskante üblicherweise arrondiert ist.

Die Profilierung bei den Lamellenrakeln wird typischerweise mittels eines Schleifvorganges erreicht, bei dem eine Schnittbewegung durch eine Rotation eines Schneidewerkzeuges gegenüber dem eingespannten Werkstück erzeugt wird. Im Anschluss zum Fräsvorgang folgt eine Nachbearbeitung der Hauptflächen, um die durch den Fräsvorgang entstandenen Unebenheiten zu beseitigen. Die Nachbearbeitung erfolgt typischerweise durch einen Poliervorgang und / oder einen Läppvorgang.

Die GB 1,289,609 betrifft verschleissbeständige Rakel. Diese umfassen Bereiche aus einem harten, sowie Bereiche aus einem weichen Material. Die Rakel aus Metall weist auf einer Seitenfläche eine lange, flache und enge Ausnehmung auf, welche parallell zur Arbeitskante verläuft. In der Ausnehmung ist ein Streifen aus verschleissbeständigem Material gehalten, dessen Härte grösser ist als diejenige des umgebenden Materials. Die Ausnehmung kann durch Hobeln, Fräsen, Schleifen oder Formen erzeugt werden.

Die US 2008/0096037 A1 betrifft ein Stahlband für die Herstellung von Rakeln, wobei der verwendete Stahl eine Zusammensetzung von 1 - 3 Gew.% C, 4 - 10 Gew.% Cr, 1 - 8 Gew.% Mo, 2.5 - 10 Gew.% V und ansonsten Eisen aufweist und wobei das Stahlband in einem pulvermetallurgischen Verfahren hergestellt wird. Bei der Herstellung der Rakel können die Kanten des Bandes durch Hobeln und/oder Fräsen bearbeitet werden, um das gewünschte Kantenprofil zu erhalten.

Die DE-OS 1 807 325 betrifft ein nicht gattungsgemässes Verfahren zur Herstellung von Rakeln (insbesondere Papierstreichmessern), welches sich auf Rakel in Keilform bezieht. Deren Schrägfläche wird durch Hobeln in Längsrichtung der Rakel hergestellt. Dadurch soll eine bessere Glätte erreicht werden, während gleichzeitig die Herstellungskosten gegenüber herkömmlichen Rakeln, die durch Schleifen und Honen bearbeitet werden, gesenkt werden können. Besonders wichtig ist es gemäss der Druckschrift, dass durch das Hobeln Querrillen im Bereich der Arbeitskante vermieden werden können. Bevorzugt erfolgt die Bearbeitung durch Hobeln unter Abheben eines einzigen Spanes unter Verwendung eines einzigen Hartmetall-Hobelmeissels. Auch die der Schrägfläche benachbarten Flächen werden bevorzugt in Längsrichtung bearbeitet.

Die bekannten Verfahren zur Herstellung von Lamellenrakeln mit einem Bereich mit konstant verminderter Materialstärke sind langsam und aufwändig.

### Darstellung der Erfindung

Aufgabe der Erfindung ist es, ein dem eingangs genannten technischen Gebiet zugehörendes Herstellungsverfahren für Rakel mit einem Bereich mit konstant verminderter Materialstärke zu schaffen, welches effizient und kostengünstig ist.

Die Lösung der Aufgabe ist durch die Merkmale des Anspruchs 1 definiert. Gemäss der Erfindung wird der Bereich mit verminderter Materialstärke mittels eines Hobelvorgangs auf einen Grundkörper mit im Wesentlichen konstanter Materialstärke erzeugt.

Ein solcher Grundkörper besteht vorzugsweise aus Metall, insbesondere aus Stahl, wobei andere Materialien nicht auszuschliessen sind. Die Form des Grundkörpers entspricht im Wesentlichen einem Band, dessen Querschnittfläche rechtwinklig zu einer Längsrichtung vorzugsweise eine rechteckige Form aufweist, wobei andere Formen einer Querschnittsfläche nicht auszuschliessen sind. Zum Beispiel könnte die Querschnittsfläche trapezförmig oder aber auch dreieckig sein.

Nach dem Hobeln des Grundkörpers erhält man vorerst eine Rakelbahn, die sich von dem Grundkörper im Wesentlichen durch die Querschnittsfläche unterscheidet. Während der Grundkörper typischerweise eine rechteckige Querschnittsfläche hat, weist die Rakelbahn nun eine rechteckige Querschnittsfläche mit einem Ausschnitt im Bereich einer ersten Ecke des Grundkörpers auf.

Der Ausschnitt kann rechteckig sein, er kann aber auch andere Formen aufweisen. Zum Beispiel kann der Ausschnitt trapezförmig sein, wobei das Trapez zwei rechte Winkel aufweist und eine längste Seite sowie eine zur längsten Seite rechtwinklig anliegende Seite mit entsprechenden Seiten der Querschnittsfläche des unbearbeiteten Grundkörpers korrespondieren. Weiter ist auch eine Abrundung des Bereiches der ersten gegenüberliegenden Ecke denkbar, wobei die Abrundung nicht zwingend die Form eines Kreisbogenstückes aufweisen muss, sondern eine beliebige Form aufweisen kann. Bevorzugt ist jedoch die Form des Ausschnittes konvex und weist zwei zueinander senkrecht stehende Kanten auf, die zu den ursprünglichen Kanten der Querschnittsfläche des Grundkörpers parallel sind.

Die möglichen Dimensionen der Rakel sind vielfältig. Üblicherweise liegen die Grundkörper als Rollen ä 100 m vor. Eine Rakel hat bevorzugt eine Dicke kleiner als ein Millimeter, insbesondere zwischen 0.15 und 0.4 mm. Die Breite der Rakel liegt bevorzugt im Bereich zwischen 8 und 80 mm, wobei davon vorzugsweise 1.1 bis 1.7 mm auf die Lamellenbreite entfallen. Die Lamellendicke liegt üblicherweise im Bereich von 50 bis 150 µm. Die Geradheitsabweichung liegt vorzugsweise unter 0.6 mm auf 3 m Rakellänge. Diese Angaben weisen auf typische Dimensionen einer Rakel hin, schliessen aber nicht aus, dass das erfindungsgemässe Verfahren nicht auch für die Herstellung von Rakeln anderer Dimensionen herangezogen werden kann.

Durch die Herstellung des Bereiches mit konstant verminderter Materialstärke mittels eines einzelnen Hobelvorganges wird eine schnelle und präzise Produktion von Rakel erreicht. Eine Hobelleistung kann dabei zwischen 60 - 150 m/min liegen.

In einer bevorzugten Ausführungsform des Verfahrens ist der Hobelvorgang so präzise, dass sich eine Nachbearbeitung der Hauptflächen im Bereich der verminderten Materialstärke erübrigt. Damit können Arbeitsschritte wie zum Beispiel Schleifen und/oder Polieren der Hauptfläche ausgelassen werden, wodurch Zeit und damit Kosten gespart werden können.

Insbesondere auf die Nachbearbeitung des Metalls des Grundkörpers kann damit verzichtet werden, wobei jedoch allfällige Beschichtungen nicht ausgeschlossen sind. Je nach Anwendungsgebiet kann es jedoch von Vorteil sein, die Hauptfläche trotzdem nachzubearbeiten. Besonders dann, wenn eine aussergewöhnlich hohe Präzision der Hauptfläche gefordert ist. In diesem Fall können aber gegenüber herkömmlichen Verfahren gröbere Poliervorgänge ausgelassen werden, womit das erfindungsgemässe Verfahren gegenüber den eingangs erwähnten Verfahren noch immer an Effizienz gewinnt. Anderseits wird der Bereich der Arbeitskante vorzugsweise nachbearbeitet (siehe weiter unten).

Bevorzugt wird durch einen einzigen Hobelvorgang in einem Grundkörper eine zusammenhängende Region verminderter Materialstärke erzeugt, wobei die Ausdehnung der Region verminderter Materialstärke der gemeinsamen Ausdehnung der Bereiche verringerter Materialstärke zweier nebeneinander liegenden Rakelbahnen entspricht. Nach dem Hobelvorgang erfolgt ein Trennvorgang in der Region verminderter Materialstärke, wodurch die nebeneinander liegenden Rakelbahnen getrennt werden.

Die Rakelbahnen liegen also vor dem Trennvorgang einander spiegelsymmetrisch gegenüber, das heisst der Bereich verminderter Materialstärke liegt als zusammenhängendes Gebiet vor, der durch einen Hobel und durch einen Hobelvorgang erzeugt werden kann. Damit können durch einen einzigen Hobelvorgang bei zwei Rakelbahnen die Bereiche mit konstant verminderter Materialstärke gleichzeitig hergestellt werden, womit sich die Effizienz des Verfahrens in diesem Arbeitsschritt nahezu verdoppelt.

Der Grundkörper weist dazu eine Breite auf, die der Summe der Breiten der herzustellenden Rakelbahnen entspricht. Es ist dabei nicht auszuschliessen, dass die beiden herzustellenden Rakelbahnen unterschiedliche Breiten aufweisen. Vorzugsweise weist der Grundkörper jedoch eine konstante Dicke auf. Es ist jedoch denkbar, dass der Hobel so beschaffen ist, dass sich die Lamellendicke der Rakel unterscheiden kann. Vorzugsweise ist der Hobel aber so beschaffen, dass die Lamellendicken der herzustellenden Rakelbahnen gleich sind.

Die Trennung der nebeneinander liegenden Rakelbahnen erfolgt nach dem Hobelvorgang vorzugsweise in der Mitte des Bereiches mit konstant verminderter Materialstärke, in einer Längsrichtung der Rakelbahnen. Alternativ kann die Trennung auch aussermittig im Bereich der verminderten Materialstärke erfolgen, damit Rakelbahnen mit unterschiedlicher Lamellenbreite erzeugt werden.

In einer weiteren bevorzugten Ausführungsform werden durch einen einzigen Hobelvorgang in einem Grundkörper mehrere zueinander parallel liegende zusammenhängende Regionen verminderter Materialstärke erzeugt. Die Ausdehnungen der einzelnen Regionen entsprechen dabei der gemeinsamen Ausdehnung der Bereiche verringerter Materialstärke jeweils zweier nebeneinander liegender Rakelbahnen, wie vorstehend beschrieben. Nach dem Hobelvorgang erfolgt ein Trennvorgang in den Regionen verminderter Materialstärke sowie in den Regionen zwischen den Regionen verminderter Materialstärke jeweils in einer Längsrichtung der Rakelbahnen. Dadurch werden die nebeneinander liegenden Rakelbahnen getrennt. Mit diesem Verfahren wird eine parallele Produktion von mehreren Rakelbahnen ermöglicht.

Um dieses Verfahren zu ermöglichen, werden vorzugsweise mehrere Hobel parallel angeordnet und entweder untereinander verbunden, so dass nur eine Hobelführung notwendig ist, oder die Hobel werden einzeln geführt. Bei einer Anordnung von n Hobeln können 2n Rakelbahnen hergestellt werden. Im Unterschied zum zuvor beschriebenen Verfahren müssen in diesem Falle zusätzlich (n-1) Trennvorgänge in den Regionen nicht verminderter Materialstärke erfolgen. Dieses Verfahren hat den Vorteil, dass das Band während des Hobelns einfacher gegenüber möglicher Torsionen stabil gehalten werden kann. Während der zusätzlichen Trennvorgänge in den Bereichen nicht verminderter Materialstärke muss besonders darauf geachtet werden, dass sich die Rakelbahnen nicht verziehen.

Vorzugsweise erfolgt der Trennvorgang durch Laserschneiden.

Alternativ kann der Trennvorgang auch durch Sägen oder Schneiden erfolgen. Es hat sich jedoch gezeigt, dass durch Laserschneiden die Rakelbahnen weniger in Gefahr laufen verformt zu werden, womit das Laserschneiden als Trennmethode zu bevorzugen ist.

In einem bevorzugten Verfahren erfolgt der Trennvorgang in demselben Arbeitsschritt wie der Hobelvorgang, d. h. das Trennwerkzeug ist hinter dem Hobelwerkzeug angeordnet, so dass beide Arbeitsschritte nacheinander, im Rahmen desselben Halte- und Transportvorgangs auf den Grundkörper einwirken können. Damit kann eine effizientere Produktion von Rakeln erreicht werden. Alternativ können die Arbeitsschritte auch sequentiell, in zwei nacheinander angeordneten Bearbeitungsstationen, erfolgen.

Vorzugsweise wird der Bereich der Arbeitskante nach dem Trennvorgang durch einen oder mehrere der Prozesse Arrondieren, Schleifen, Läppen und Polieren nachbearbeitet, um die gewünschte Formgebung und den angestrebten Gütegrad der Arbeitskante zu erreichen.

Zum Läppen wird in an sich bekannter Weise eine Suspension verwendet, die aus Läpp-Pulver (zum Beispiel Aluminiumoxid, Siliziumkarbid, Diamant) und einer Flüssigkeit (zum Beispiel Wasser oder Läppöl) besteht.

Je nach Einsatzgebiet und Qualitätsanforderung kann auch auf einen oder mehrere Nachbearbeitungsprozesse der Arbeitskante verzichtet werden.

Bevorzugt erfolgt das Arrondieren durch einen weiteren Hobelvorgang. Da ein Hobelvorgang verhältnismässig schnell durchgeführt werden kann, wird damit Zeit in der Produktion gespart. Des Weiteren kann damit, falls der Hobelvorgang genügend präzise durchgeführt werden kann, auf eine weitere Nachbearbeitung der Arbeitskante verzichtet werden, wodurch Arbeitsschritte und damit wiederum Zeit gespart werden kann.

Alternativ, insbesondere wenn durch einen Hobelvorgang und einen Trennvorgang mehrere Rakelbahnen hergestellt werden sollen, kann das Arrondieren auch nachträglich erfolgen. Je nach Dicke der Arbeitskante kann die Bearbeitung der Arbeitskante entweder durch einen Hobelvorgang, einen Fräsvorgang oder durch Schleifen, Polieren / Läppen erfolgen.

In einer bevorzugten Ausführungsform erfolgt die Nachbearbeitung der Arbeitskante gar durch denselben Hobelvorgang, mit dem der Bereich der verminderten Materialstärke erzeugt wird.

Bei einer seriellen Produktion von Rakeln, respektive wenn durch den Hobelvorgang genau eine Rakelbahn hergestellt wird, ist der Hobel bevorzugt so beschaffen, dass gleichzeitig zur Herstellung des Bereiches mit verminderter Materialstärke die Arbeitskante durch dasselbe Hobelwerkzeug arrondiert wird.

Alternativ kann das Arrondieren der Arbeitskante im Anschluss zur Herstellung des Bereiches mit verminderter Materialstärke erfolgen, wobei die Vorgänge nicht durch dieselbe Methode erfolgen müssen. Zum Beispiel kann die Herstellung des Bereichs verminderter Materialstärke durch Hobeln und das Arrondieren der Arbeitskante durch Läppen, Polieren oder durch Schleifen erfolgen.

In einer bevorzugten Ausführungsform wird die Rakel nach der Herstellung der Lamelle beschichtet. Je nach Beschichtung kann damit die Rakel für individuelle Einsatzgebiete angepasst werden. Insbesondere bei Anwendungen, wo die Rakel in Kontakt mit Säuren oder ähnlichen das Metall angreifenden Stoffen kommt, kann für diese durch eine geeignete Beschichtung die Lebensdauer erhöht werden. Des Weiteren können Druckprobleme wie Auszieher (Rotznasen), Tonen und Druckstreifen deutlich reduziert werden.

Je nach Anwendungsgebiet, insbesondere bei einem Einsatz mit nicht korrosiven Stoffen kann auf die Beschichtung auch verzichtet werden.

Vorzugsweise besteht die Rakel aus Metall, insbesondere aus Stahl, und ist im Wesentlichen bandförmig ausgebildet, wobei ein Querschnitt bezüglich einer Längsrichtung einen, z. B. im Wesentlichen rechteckigen, randständigen Ausschnitt aufweist.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Ansicht eines Grundkörpers;
- Fig. 2: eine schematische Ansicht eines Hobels;
- Fig. 3: eine schematische Darstellung des Ablaufs eines Hobelvorgangs auf einen Grundkörper;
- Fig. 4: eine schematische Ansicht einer Rakelbahn;
- Fig. 5: eine schematische Darstellung des Ablaufs eines Hobelvorganges auf einen Grundkörper, wobei durch einen Hobelvorgang zwei Rakelbahnen auf einmal gehobelt werden;
- Fig.6: eine schematische Darstellung eines Laser-Schneidvorgangs zum Auftrennen eines gehobelten Grundkörpers in zwei Rakelbahnen;
- Fig.7: eine schematische Darstellung eines Ablaufs eines Hobelvorganges auf einen Grundkörper, wobei durch einen Hobelvorgang mit drei verbundenen Hobeln sechs Rakelbahnen auf einmal gehobelt werden;
- Fig.8: eine schematische Darstellung des Ablaufs eines Hobelvorganges zur Herstellung der Arbeitskante einer Rakelbahn; und
- Fig. 9: eine schematische Ansicht einer weiteren Rakel.

Grundsätzlich sind in den Figuren gleiche Teile mit gleichen Bezugszeichen versehen.

### Wege zur Ausführung der Erfindung

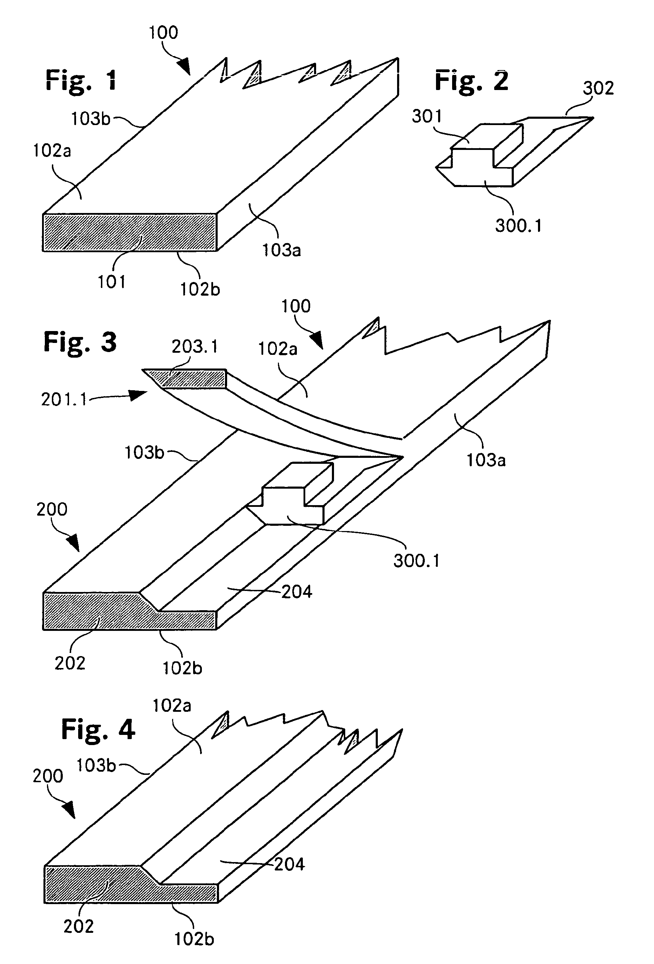

Die **Figur 1** zeigt schematisch einen Grundkörper 100 aus Stahl, der als Ausgangsprodukt für die Herstellung der Rakel dient. Der Grundkörper 100 ist bandartig ausgebildet und hat rechtwinklig zu einer Längsrichtung des Grundkörpers 100 eine Cluerschnittsfläche 101 von der Form eines Rechtecks, das heisst, der Grundkörper 100 ist als gerades Prisma ausgebildet. Zur Andeutung der bandartigen Ausbildung des Grundkörpers 100 ist die Querschnittsfläche 101 schraffiert und die gegenüberliegende Seite ist als Hinweis auf die effektiv sehr grosse Länge des Grundkörpers 100 wie auch bei den nachfolgenden Figuren ausgefranst dargestellt. Die Dimensionen des Grundkörpers 100, insbesondere das Höhen/Breiten-Verhältnis der Querschnittsfläche 101, sind zur besseren Illustration verzerrt dargestellt. Das effektive Verhältnis zwischen Höhe und Breite der Querschnittsfläche 101 des Grundkörpers 100 liegt ungefähr in einem Bereich von 1:50 bis hin zu 1:200. Der Grundkörper 100 weist damit zwei Seitenflächen 103a, 103b auf, die in diesem Ausführungsbeispiel jeweils senkrecht zu zwei Hauptflächen 102a, 102b stehen, wobei die Seitenflächen 103a, 103b respektive die Hauptflächen 102a, 102b jeweils zueinander parallel sind

In der **Figur 2** ist ein Hobel 300.1 für das erfindungsgemässe Verfahren schematisch dargestellt. Dieser umfasst ein Führungselement 301 zur Führung desselben sowie eine Schneidkante 302 für die Bearbeitung des Grundkörpers 100. Die Schneidkante 302 ist im Wesentlichen gerade, weist aber je nach Form der gewünschten Rakelbahn 200 eine Ausformung im Randbereich auf, die eine Profilierung des Randbereiches des zu erstellenden Bereiches mit verminderter Materialstärke 204 ermöglicht. Ein Querschnitt des Hobels 300.1 rechtwinklig zur Führungsrichtung weist in der dargestellten Ausführungsform eine Querschnittsfläche in Form eines Trapezes mit zwei rechten Winkel auf, wobei die Arbeitskanten für den Hobelvorgang durch eine erste Seite, die über keinen rechten Winkel mit den anderen Seiten verbunden ist und eine weitere, kürzere der beiden an die erste Seite angrenzende Seite gebildet werden.

Anhand der nachfolgenden **Figuren 3 - 8** werden drei bevorzugte Verfahren zur Herstellung von Rakelbahnen erläutert.

In der **Figur 3** ist schematisch ein Hobelvorgang an einem Grundkörper 100 mit einem Hobel 300.1 dargestellt, womit eine Rakelbahn 200 erzeugt wird. Dazu setzt der Hobel 300.1 parallel zu einer Hauptfläche 102a und angrenzend an eine Seitenfläche 103a des Grundkörpers 100 an und hobelt in eine Längsrichtung des Grundkörpers 100 einen Span 201.1 ab. In der vorliegenden Ausführungsform weist der Span 201.1 eine viereckige Querschnittsfläche 203.1 auf, wobei bei zwei benachbarten Ecken einer Seite jeweils ein rechter Winkel vorliegt und wobei eine nicht mit einer Kante der Querschnittsfläche 202 des Grundkörpers 100 korrespondierende Ecke einen stumpfen Winkel aufweist und eine einen spitzen Winkel aufweisende Ecke mit einer Kante der Hauptfläche 102a des unbearbeiteten Grundkörpers 100 korrespondiert.

Die **Figur 4** zeigt eine Rakelbahn 200 mit einem Bereich verminderter Materialstärke 204, die die Form eines geraden Prismas aufweist, wobei die Querschnittsfläche 202 der Rakelbahn 200 einen obig beschriebenen viereckigen Ausschnitt aufweist. Die zur Hauptfläche 102a parallele Fläche des Bereichs verminderter Materialstärke 204 wird vorzugsweise nicht nachbearbeitet. Die Arbeitskante wird im Anschluss durch eine Bearbeitung des Randbereiches, im vorliegenden Beispiel durch einen Hobelvorgang, des Bereiches verminderter Materialstärke fertig gestellt (siehe unten).

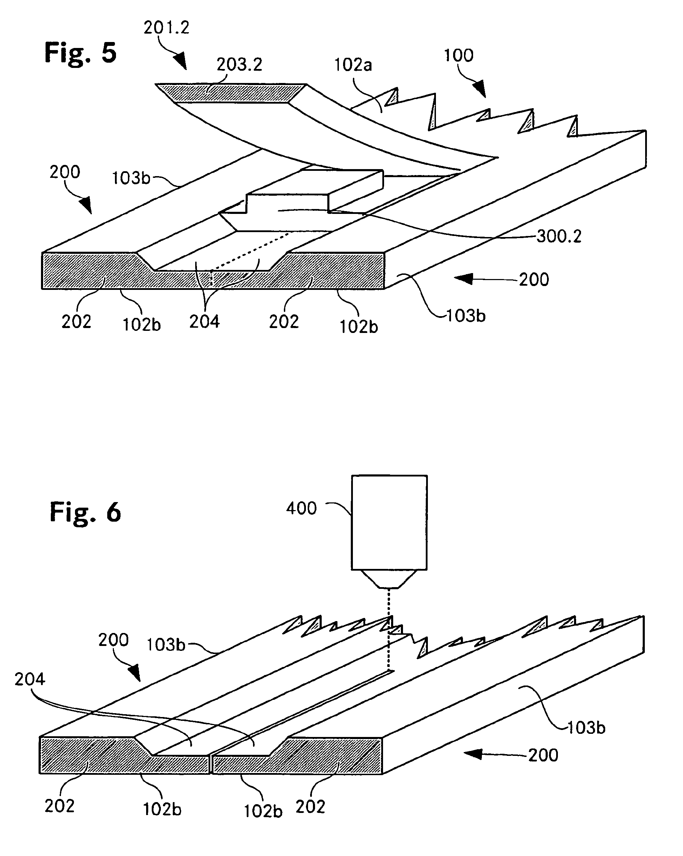

In **Figur 5** ist als weiteres bevorzugtes Ausführungsbeispiel ein Hobelvorgang an einem Grundkörper dargestellt, mit dem Bereiche verminderter Materialstärke 204 für zwei Rakelbahnen gleichzeitig erstellt werden können. Dazu weist der Hobel 300.2 eine Breite auf, die dem gemeinsamen Bereich verminderter Materialstärke 204 zweier Rakelbahnen 200 entspricht. Der Hobel 300.2 weist dazu in den Randbereichen eine den gewünschten Profilierungen der Bereiche verminderter Materialstärke 204 entsprechende Form auf, die im Wesentlichen der Form zweier verbundener obig beschriebener Hobel 300.1 entspricht, wobei der zweite Hobel 300.1 spiegelsymmetrisch zum ersten Hobel 300.1 ausgebildet ist, womit eine Querschnittsfläche der verbundenen Hobel 300.1 respektive des Hobels 300.2 die Form eines gleichschenkligen Trapezes aufweist. Der Hobel 300.2 setzt am Grundkörper 100 parallel zu einer Hauptfläche 102a und angrenzend an eine Seitenfläche 103a des Grundkörpers 100 an und hobelt in eine Längsrichtung des Grundkörpers 100 einen Span 201.2 ab. In der vorliegenden Ausführungsform weist der Span 201.2 eine gleichschenklige trapezförmige Querschnittsfläche 203.2 auf, wobei eine längere Seite der trapezförmigen Querschnittsfläche 203.2 mit einer längeren Kante der Querschnittsfläche 101 des unbearbeiteten Grundkörpers 100 korrespondiert. Mit der punktierten Linie in den Bereichen verminderter Materialstärke 204 ist angedeutet, wo der nachfolgende Trennvorgang erfolgen soll.

In der **Figur 6** ist der Trennvorgang dargestellt, mit dem die Rakelbahnen 200 getrennt werden. Bevorzugt wird dazu ein Laser oder Wasserstrahl 400 verwendet, um eine schnelle und präzise Trennung zu erreichen und um zu verhindern, dass sich die Rakelbahnen 200 beim Trennvorgang verziehen.

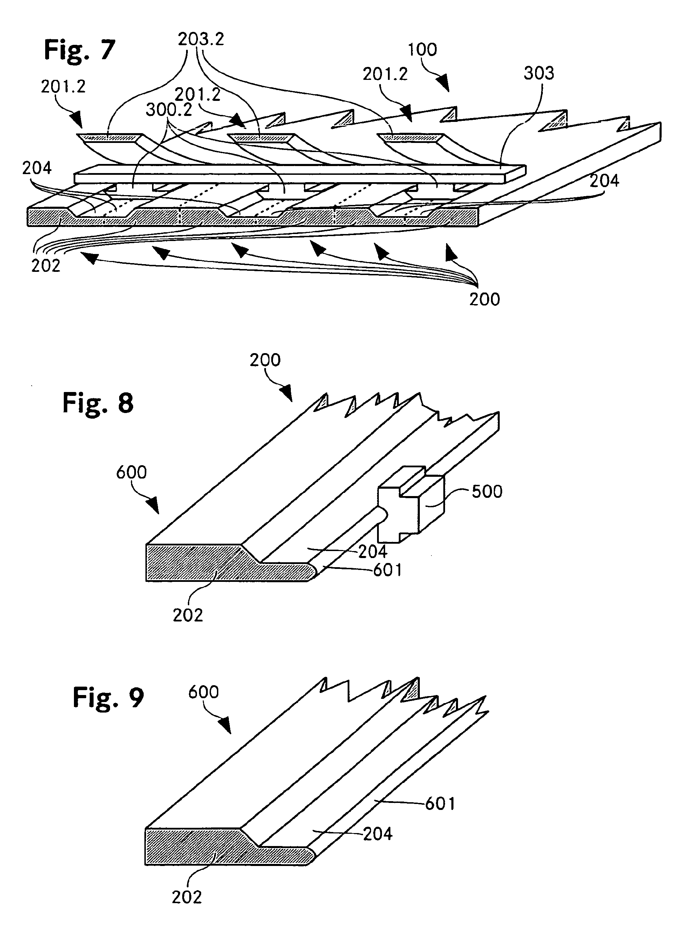

Als eine weitere bevorzugte Ausführungsform ist in der **Figur 7** ein Hobelvorgang schematisch dargestellt, mit dem Bereiche verminderter Materialstärke mehrerer Rakelbahnen 200 mittels eines Hobelvorganges hergestellt werden können. Dazu werden mehrere Hobel über ein Verbindungselement 303 so verbunden, dass sie durch eine Führung parallel betätigt werden können (in der Abbildung sind exemplarisch drei Hobel dargestellt, wobei aber auch zwei oder mehr als drei simultan verwendet werden können). Die verbundenen Hobel 300.2 setzen am Grundkörper 100 parallel zu einer Hauptfläche 102a und angrenzend an eine Seitenfläche 103a des Grundkörpers 100 an und hobeln in eine Längsrichtung des Grundkörpers 100 mehrere Späne 201.2 ab. In der vorliegenden Ausführungsform sind die Späne 201.2 unter sich identisch und weisen wiederum eine gleichschenklige trapezförmige Querschnittsfläche 203.2 auf, wobei eine längere Seite der trapezförmigen Querschnittsfläche 203.2 mit einer längeren Kante der Querschnittsfläche 101 des unbearbeiteten Grundkörpers 100 korrespondiert. Die Rakelbahnen 200 sind nach dem Hobelvorgang in den Bereichen verminderter Materialstärke 204 untereinander verbunden und sind, ausser den beiden randständigen Rakelbahnen 200, in den Bereichen nicht verminderter Materialstärke miteinander verbunden. In der **Figur 7** sind diese Bereiche mit punktierten Linien markiert, welche zugleich andeuten, wo der nachfolgende Trennvorgang erfolgt. Der Trennvorgang erfolgt auch hier vorzugsweise mittels eines Lasers (nicht dargestellt).

Nach der Herstellung des Bereiches verminderter Materialstärke 204 folgt üblicherweise eine Bearbeitung der Arbeitskante. Dies kann mittels Hobeln, Läppen, Schleifen oder Fräsen erfolgen. In der **Figur 8** ist als Beispiel die Bearbeitung der Arbeitskante 601 durch einen Hobel 500 dargestellt. Der Hobel 500 weist in einem Arbeitsbereich eine Halbkreisform auf, wobei auch andere Formen denkbar sind wie zum Beispiel eine Keilform oder dergleichen. Der Hobel 500 setzt im Randbereich des Bereiches verminderter Materialstärke 204 an und hobelt wiederum in eine Längsrichtung der Rakelbahn 200.

Die **Figur 9** zeigt eine Rakel 600 mit einer Querschnittfläche 202, einem Bereich verminderter Materialstärke 204 sowie einer arrondierten Arbeitskante 601. Je nach Anwendungsgebiet ist die Rakel 600 in der abgebildeten Form fertiggestellt. Anderseits ist eine Nachbearbeitung wie zum Beispiel in Form einer Politur oder einer Beschichtung nicht auszuschliessen.

Zusammenfassend ist festzustellen, dass durch das erfindungsgemässe Verfahren Rakel in effizienter Weise und zudem kostengünstig hergestellt werden können.

## Patentansprüche

1. Verfahren zur Herstellung von Rakeln (600) aus Metall, insbesondere aus Stahl, wobei die herzustellenden Rakel (600) in einem Bereich (204) einer Arbeitskante (601) eine verminderte Materialstärke aufweisen, wobei in diesem Bereich (204) die Materialstärke im Wesentlichen konstant ist wobei ein Hobelvorgang auf einen Grundkörper (100) mit im Wesentlichen konstanter Materialstärke angewendet wird, um den Bereich mit verminderter Materialstärke (204) zu erzeugen **dadurch gekennzeichnet, dass** durch einen einzigen Hobelvorgang in einem Grundkörper (100) eine zusammenhängende Region verminderter Materialstärke (294) erzeugt wird, deren Ausdehnung der gemeinsamen Ausdehnung der Bereiche verminderter Materialstärke (204) zweier nebeneinander liegender Rakelbahnen (200) entspricht, und dass nach dem Hobelvorgang ein Trennvorgang in der Region verminderter Materialstärke (204) erfolgt, wodurch die nebeneinander liegenden Rakelbahnen (200) getrennt werden.

2. Verfahren nach Anspruch 1, **dadurch gekennzeichnet, dass** nach dem Hobelvorgang keine Nachbearbeitung der Hauptflächen des Bereichs mit verminderter Materialstärke (204) stattfindet.

3. Verfahren nach Anspruch 1 oder 2, **dadurch gekennzeichnet, dass** durch einen einzigen Hobelvorgang in einem Grundkörper (100) mehrere zueinander parallel liegende zusammenhängende Regionen verminderter Materialstärke (204) erzeugt werden, deren Ausdehnungen der gemeinsamen Ausdehnungen der Bereiche verringerter Materialstärke (204) jeweils zweier nebeneinander liegender Rakelbahnen (200) entspricht, und dass nach dem Hobelvorgang ein Trennvorgang in den Regionen verminderter Materialstärke (204) und in den Regionen zwischen den Regionen verminderter Materialstärke (204) erfolgt, wodurch die nebeneinander liegenden Rakelbahnen (200) getrennt werden.

4. Verfahren nach einem der Ansprüche 1 bis 3, **dadurch gekennzeichnet, dass** der Trennvorgang durch Laser-oder Wasserstrahlschneiden erfolgt.

5. Verfahren nach einem der Ansprüche 1 bis 4, **dadurch gekennzeichnet, dass** der Trennvorgang in demselben Arbeitsschritt wie der Hobelvorgang erfolgt.

6. Verfahren nach einem der Ansprüche 1 oder 3-5, **dadurch gekennzeichnet, dass** der Bereich der Arbeitskante (601) durch Arrondieren und / oder Läppen und / oder Polieren nachbearbeitet wird.

7. Verfahren nach Anspruch 6, **dadurch gekennzeichnet, dass** die Nachbearbeitung der Arbeitskante (601) durch einen weiteren Hobelvorgang erreicht wird.

8. Verfahren nach Anspruch 6, **dadurch gekennzeichnet, dass** die Nachbearbeitung der Arbeitskante (601) bei der Herstellung einer einzelnen Rakelbahn (200) durch denselben Hobelvorgang erreicht wird.

9. Verfahren nach einem der Ansprüche 1 oder 3-8 **dadurch gekennzeichnet, dass** die Rakel (600) beschichtet wird.

## Claims

1. Method for the production of doctors (600) from metal, in particular from steel, the doctors (600) to be produced having a reduced material thickness in a region (204) of a working edge (601), the material thickness being essentially constant in this region (204), wherein a planing operation is used upon a basic body (100) with an essentially constant material thickness, in order to generate the region of reduced material thickness (204), **characterized in that**, by means of a single planing operation, in a basic body (100), a coherent region of reduced material thickness (204) is generated, the extent of which corresponds to the joint extent of the regions of reduced material thickness (204) of two doctor breadths (200) lying next to one another, and **in that**, after the planing operation, a separating operation takes place in the region of reduced material thickness (204), with the result that the doctor breadths (200) lying next to one another are separated.

2. Method according to Claim 1, **characterized in that**, after the planing operation, no remachining of the main surfaces of the region of reduced material thickness (204) takes place.

3. Method according to Claim 1 or 2, **characterized in that**, by means of a single planing operation, in a basic body (100), a plurality of coherent regions of reduced material thickness (204) lying parallel to one another are generated, the extents of which correspond to the joint extents of the regions of reduced material thickness (204) in each case of two doctor breadths (200) lying next to one another, and **in that**, after the planing operation, a separating operation takes place in the regions of reduced material thickness (204) and in the regions between the regions of reduced material thickness (204), with the result that the doctor breadths (200) lying next to one another are separated.

4. Method according to one of Claims 1 to 3, **characterized in that** the separating operation takes place by means of laser or water jet cutting.

5. Method according to one of Claims 1 to 4, **characterized in that** the separating operation takes place in the same work step as the planing operation.

6. Method according to one of Claims 1 or 3 to 5, **characterized in that** the region of the working edge (601) is remachined by means of rounding and/or lapping and/or polishing.

7. Method according to Claim 6, **characterized in that** the remachining of the working edge (601) is achieved by means of a further planing operation.

8. Method according to Claim 6, **characterized in that**, in the production of an individual doctor breadth (200), the remachining of the working edge (601) is achieved by means of the same planing operation.

9. Method according to one of Claims 1 or 3 to 8, **characterized in that** the doctor (600) is coated.

## Revendications

1. Procédé de fabrication de racles (600) en métal, en particulier en acier, dans lequel les racles à fabriquer (600) présentent une épaisseur de matière réduite dans une région (204) d'une arête de travail (601), dans lequel l'épaisseur de matière est sensiblement constante dans cette région (204), dans lequel on effectue une opération de rabotage sur un corps de base (100) avec une épaisseur de matière sensiblement constante afin de produire la région avec une épaisseur de matière réduite (204), **caractérisé en ce que** l'on produit dans un corps de base (100), par une seule opération de rabotage, une région continue d'épaisseur de matière réduite (294), dont l'extension correspond à l'extension commune des régions d'épaisseur de matière réduite (204) de deux bandes de racle (200) disposées l'une à côté de l'autre, et **en ce qu'**à l'opération de rabotage succède une opération de coupe dans la région d'épaisseur de matière réduite (204), par laquelle les bandes de racle (200) disposées l'une à côté de l'autre sont séparées.

2. Procédé selon la revendication 1, **caractérisé en ce qu'**aucune opération de parachèvement des faces principales de la région d'épaisseur de matière réduite (204) n'est effectuée après l'opération de rabotage.

3. Procédé selon la revendication 1 ou 2, **caractérisé en ce que** l'on produit dans un corps de base (100), en une seule opération de rabotage, plusieurs régions continues d'épaisseur de matière réduite (204) disposées parallèlement les unes aux autres, dont les extensions correspondent aux extensions communes des régions d'épaisseur de matière réduite (204) de chaque fois deux bandes de racle (200) disposées l'une à côté de l'autre et **en ce qu'**à l'opération de rabotage succède une opération de coupe dans les régions d'épaisseur de matière réduite (204) et dans les régions situées entre les régions d'épaisseur de matière réduite (204), par laquelle les bandes de racle (200) disposées l'une à côté de l'autre sont séparées.

4. Procédé selon l'une quelconque des revendications 1 à 3, **caractérisé en ce que** l'opération de coupe est effectuée par coupe au laser ou au jet d'eau.

5. Procédé selon l'une quelconque des revendications 1 à 4, **caractérisé en ce que** l'opération de coupe est effectuée au cours de la même étape que l'opération de rabotage.

6. Procédé selon l'une quelconque des revendications 1 ou 3 à 5, **caractérisé en ce que** la région de l'arête de travail (601) est parachevée par arrondissage et/ou rodage et/ou polissage.

7. Procédé selon la revendication 6, **caractérisé en ce que** le parachèvement de l'arête de travail (601) est réalisé par une nouvelle opération de rabotage.

8. Procédé selon la revendication 6, **caractérisé en ce que** le parachèvement de l'arête de travail (601) est réalisé par la même opération de rabotage lors de la fabrication d'une seule bande de racle (200).

9. Procédé selon l'une quelconque des revendications 1 ou 3 à 8, **caractérisé en ce que** l'on revêt la racle (600).
